# EUROPEAN PATENT APPLICATION

(11) **EP 1 615 223 A2**
(43) Date of publication of application: **11.01.2006**
(21) Application number: 05014103.5
(22) Date of filing: 29.06.2005
(51) Int. Cl.: G11B 33/08, G11B 33/14

(54) **Hard disk drive and method adopting damping member with open-cell structure**

(30) Priority: 03.07.2004 KR 2004051803
(71) Applicant: SAMSUNG ELECTRONICS CO., LTD., Suwon-si, Gyeonggi-do (KR)
(72) Inventor: Lee, Jae-Suk, -dong Yeontong-gu, Suwon-si, Gyeonggi-do (KR)
(74) Representative: Grünecker, Kinkeldey, Stockmair & Schwanhäusser Anwaltssozietät

(57) **Abstract**

A hard disk drive having a housing including a base member, a cover member, a damping plate, and a buffer member. The base member supports a spindle motor for rotating a data storage disk and an actuator having a read/write head, with the cover member being attached to the base member to enclose the disk, the spindle motor, and the actuator. The damping plate is spaced a predetermined distance from a top surface of the cover member to form an air-gap. The buffer member is disposed between the cover member and the damping plate and along the circumference of the air-gap, with the buffer member being made of a material pervious to air but impervious/sealed to water, for example, polyurethane foam having a plurality of open-cells and closed-cells. Accordingly, even though air pressure varies, air pressures inside and outside the air-gap can be equalized.

## Description

### BACKGROUND OF THE INVENTION

### 1. Field of the Invention

Embodiments of the present invention relate to a hard disk drive (HDD), and more particularly, to a housing for a HDD that can prevent a damping plate, absorbing external shocks and internal noises, from being caused to contact a cover member.

### 2. Description of the Related Art

Hard disk drives (HDDs), which store information for computers, read or write data on a disk using a read/write head. In HDDs, the read/write head operates by being moved by an actuator to a desired position a predetermined height above a recording surface of the rotating disk.

HDDs include a spindle motor, one or more data storage disks mounted on the spindle motor, and an actuator for moving a read/write head for reading and writing data to a predetermined position on the disks.

The disks, the spindle motor, and the actuator can be enclosed by a housing having a base member and a cover member. The base member and the cover member can be assembled using a plurality of fastening screws. A gasket is inserted between the base member and the cover member to prevent dust or humidity from entering the HDD.

The housing of the HDD has a typical structure capable of absorbing external shocks and internal noises. Specifically, a thin damping plate made of stainless steel can be installed on a top surface of the cover member, and the damping plate can be spaced a predetermined distance from the top surface of the cover member by a buffer member. Accordingly, an air-gap is formed between the damping plate and the cover member. The air-gap can reduce noises inside the HDD and also act as an air damper for absorbing shocks applied to the damping plate. The buffer member is typically made of a viscoelastic material, such as nitrile butadiene rubber (NBR), and absorbs and attenuates shocks transmitted to the cover member from the damping plate.

The HDD constructed as above is typically subjected to a cleaning process during its assembling process. After the cleaning process, the HDD is subjected to a drying process, which is performed in a vacuum state in order to promote dry efficiency. During the vacuum drying process, air leaks out of the air-gap due to the high difference of air pressures inside and outside the air-gap, thereby forming an even lower air pressure inside the air-gap. After the drying process is completed, the damping plate may become warped toward the cover member, due to an air pressure difference between the inside of the air-gap at the low air pressure and the outside of the air-gap, having recovered to a normal air pressure, thereby causing the damping plate to buckle against the top surface of the cover member.

Further, the completely assembled HDD may be subjected to an altitude test. Since the altitude test is performed under various air pressure conditions, air inside the air-gap may leak out, again due to the difference of air pressures inside and outside the air-gap, thereby again causing the damping plate to be pressed to contact the cover member.

If the damping plate is warped and becomes pressed to contact the cover member, due to air pressure changes, the air-gap cannot fulfill its desired function, i.e., external shocks applied to the damping plate may be directly transmitted to the cover member. Moreover, since the air-gap cannot attenuate noise inside the HDD, noise emissions also increase.

### SUMMARY OF THE INVENTION

It is an object of the present invention to provide a hard disk drive (HDD), and housing therefore, that prevents a damping plate from buckling against a cover member and simultaneously can absorb external shocks and internal noises.

This object is solved by a hard disk housing with the features of claim 1, a hard disk drive with said housing and a corresponding housing method.

The sealing of the air-gap may further include equalizing pressure within the air-gap and a pressure outside the air gap.

Additional aspects and/or advantages of the invention will be set forth in part in the description which follows and, in part, will be apparent from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is an exploded perspective view of a hard disk drive (HDD), according to an exemplary embodiment of the present invention;
FIG. 2 is a partial sectional view of a housing, e.g., as shown in FIG. 1, according to an embodiment of the present invention; and
FIG. 3 is a view illustrating a structure of a buffer member, e.g., as shown in FIGS. 1 and 2, according to an embodiment of the present invention.

### DETAILED DESCRIPTION OF THE PREFERRED EMBODIMENTS

Reference will now be made in detail to the embodiments of the present invention, examples of which are illustrated in the accompanying drawings, wherein like reference numerals refer to the like elements throughout. The embodiments are described below to explain the present invention by referring to the figures.

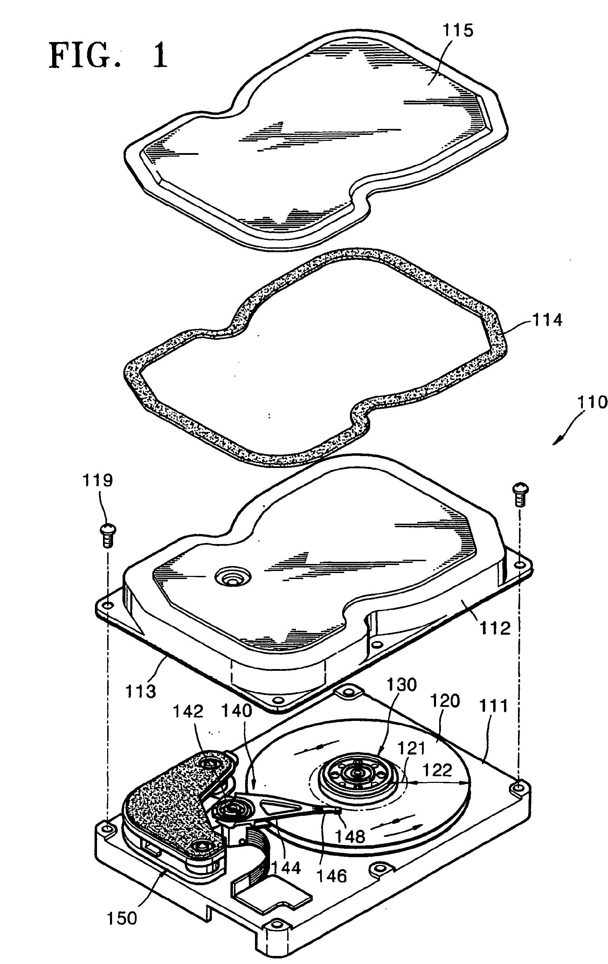

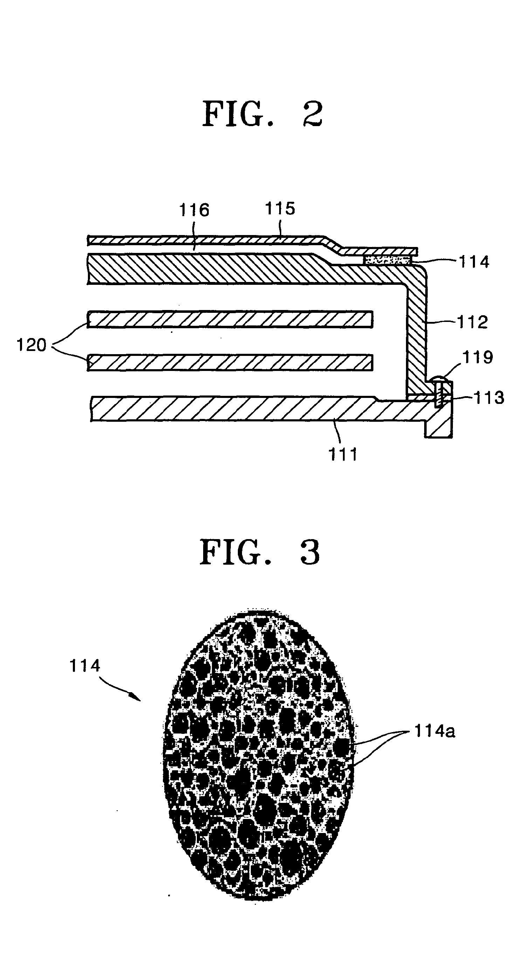

FIG. 1 is an exploded perspective view of a hard disk drive (HDD), according to an exemplary embodiment of the present invention. FIG. 2 is a partial sectional view of the housing shown in FIG. 1. FIG. 3 is a view illustrating a structure of a buffer member shown in FIGS. 1 and 2.

Referring to FIGS. 1 and 2, the HDD includes a data storage disk 120, a spindle motor 130 for rotating the disk 120, and an actuator 140 for moving a read/write head to a predetermined position over the disk 120. The disk 120, the spindle motor 130, and the actuator 140 are enclosed and protected by a housing 110.

One or more disks 120, which are data recording media, are mounted on the spindle motor 130 and are rotated by the spindle motor 130. A parking zone 121 on which the read/write head is parked when the HDD stops running is formed on an inner circumferential side of the disk 120, and a data zone 122, where data is recorded, formed on an outer circumferential side of the disk 120.

The actuator 140 moves the read/write head, for writing or reading data on the disk 120, to a predetermined position over the disk 120, and is pivotably installed on a base member 111 of the housing 110. Specifically, the actuator 140 includes a swing arm 144 rotatably coupled to a pivot 142 installed on the base member 111, a suspension 146 installed on an end portion of the swing arm 144 and adapted to elastically bias a slider 148 on which the read/write head is mounted toward a surface of the disk 120, and a voice coil motor (VCM) 150 for rotating the swing arm 144.

The VCM 150 is controlled by a servo control system, and rotates the swing arm 144 in a direction according to Fleming's Left Hand Rule, due to an interaction between current input to a VCM coil and a magnetic field formed by magnets. That is, if the HDD is tumed on and the disk 120 begins to rotate, the VCM 150 rotates the swing arm 144 clockwise to move the slider 148 with the read/write head thereon from the parking zone 121 to the data zone 122 of the disk 120. The slider 148 is lifted a predetermined height above the surface of the disk 120 due to a lifting force generated by the rotating disk 120, and in this state, the head mounted on the slider 148 reads or writes data on the recording surface of the disk 120. In contrast, if the HDD does not operate, that is, the disk 120 stops rotating, the VCM 150 rotates the swing arm 144 counterclockwise to park the slider 148 with the head in the parking zone 121 of the disk 120.

A method of parking the head includes a contact start stop method (CSS) and a ramp loading method. The ramp loading method installs a ramp (not shown) outside the disks and parks the head on the ramp. Embodiments of the present invention can be applied to HDDs using the ramp loading method as well as the CSS method.

The housing 110 includes the base member 111, on which the disk 120, the spindle motor 130, and the actuator 140 are supported, and a cover member 112 attached to the base member 111, to enclose and protect the disk 120, the spindle motor 130, and the actuator 140. The cover member 112 may be attached to the base member 111 with a plurality of fastening screws 119. Here, a gasket 113 may be inserted between the base member 111 and the cover member 112 to prevent dust and humidity from entering the HDD. The gasket 113 is typically made of a viscoelastic material, such as rubber, and reduces vibrations of the HDD.

The housing 110 may further include a damping plate 115 disposed on a top surface of the cover member 112, and a buffer member 114, disposed between the damping plate 115 and the cover member 112.

Specifically, the damping plate 115 can be made of elastic metal. For example, the damping plate 115 may be manufactured by pressing a stainless steel sheet with a thickness of about 1 mm or less into a shape corresponding to the top surface of the cover member 112. The damping plate 115 manufactured in this way is spaced a predetermined distance from the top surface of the cover member 112. Accordingly, an air-gap 116 is formed between the damping plate 115 and the cover member 112. The air-gap 116 can absorb noises inside the HDD to reduce noise emissions, and also acts as an air damper for absorbing shocks applied to the damping plate 115.

The buffer member 114 is disposed between an edge portion of the cover member 112 and an edge portion of the damping plate 115. The buffer member 114 can take the shape of the circumference of the air-gap 116 formed between the damping plate 115 and the cover member 112. Top and bottom surfaces of the buffer member 114 can be attached to a bottom surface of the damping plate 115 and the top surface of the cover member 112, respectively, using a predetermined adhesive, for example.

The buffer member 114 absorbs and attenuates shocks transmitted from the damping plate 115 to the cover member 112.

Further, in embodiments of the present invention, the buffer member 114 allows only air to pass between the air-gap 116 and the outside of the HDD. According to embodiments of the present invention the buffer member 114 also functions to maintain an equalized air pressure differential between the air-gap 116 and the outside of the HDD.

To this end, according to embodiments of the present invention, the buffer member 114 can be made of a material pervious to air but impervious to water. Specifically, it is preferable, though not necessary, that the buffer member 114 be made of polyurethane foam. As is well known, polyurethane foam is generally preferable since it is a type of foam rubber having excellent shock absorbency and resilience. Further, as shown in FIG. 3, the polyurethane foam has a plurality of cells 114a. The cells 114a formed inside the polyurethane foam include closed cells and open-cells. The open-cells have a very small size, and collectively create meandering paths inside the buffer member 114 that are in contact with the air outside the buffer member 114. Accordingly, air can flow through the buffer member 114 relatively freely via the open-cell paths, but water or foreign substances cannot pass through the buffer member 114. As a result, according to embodiments of the present invention, the outside of the HDD and the air-gap 116 interact with each other only via air that travels through the buffer member 114, made of polyurethane foam.

The percentage of the open-cells in the plurality of cells 114a of the polyurethane foam can be easily adjusted during the manufacturing process of the polyurethane foam. In one embodiment, it is preferable that the percentage of the open-cells be 20 to 50%, and more preferably, about 30%. If the percentage of the open-cells is less than 20%, air cannot flow freely. Conversely, if the percentage of the open-cells is greater than 50%, the density of the polyurethane foam becomes reduced too much, and the shock absorbency of the buffer member 114 may deteriorate.

According to embodiments of the present invention, as described above, since the outside of the HDD and the air-gap 116 interact with each other through air via the buffer member 114, during the vacuum drying process or the altitude test process of the HDD, air pressure inside and outside the air-gap 116 can be kept equalized. Consequently, the conventional problem of the damping plate 115, buckling against the cover member 112 due to an air pressure difference, can be solved. Thus, the air-gap 116 can fulfil its role in absorbing external shocks and internal noises.

As described above, even though external air pressure conditions vary, the air pressure inside and outside the air-gap can be kept equalized by way of the buffer member having the plurality of open-cells, thereby preventing the damping plate from buckling against the cover member. Accordingly, the air-gap formed between the damping plate and the cover member can effectively absorb external shocks and internal noises.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A hard disk drive housing (100) comprising:
a base member (111) to support a spindle motor (130), for rotating a data storage disk (120), and an actuator (140), having a read/write head;
a cover member (112) attached to the base member (111) to enclose the disk (120), the spindle motor (130), and the actuator (140);
a damping plate (115) spaced a predetermined distance from a top surface of the cover member (112) to form an air-gap (116) between the damping plate and the cover member, and
a buffer member (114) disposed between the cover member (112) and the damping plate (115) and along the circumference of the air-gap to seat the air-gap, wherein the buffer member (114) is made of a material pervious to air but sealed against water.

2. The housing of claim 1, wherein the buffer member (114) is made of a material having a plurality of cells (114a) comprised of open cells and closed cells.

3. The housing of claim 2, wherein the material is polyurethane foam.

4. The housing of claim 2 or 3, wherein a percentage of the open cells (114a) in the plurality of cells ranges from 20 to 50%.

5. The housing of claim 4, wherein the percentage of the open cells (114a) in the plurality of cells is about 30%.

6. A hard disk drive comprising a spindle motor for rotating a storage disk, an actuator having a read/write head, and a hard disk drive housing according to one of the previous claims.

7. A housing protection method for a hard disk drive, comprising the steps of:
forming an air-gap (116) between a damping plate (115), supporting a spindle motor (139) rotating a data storage disk (120) and an actuator (140) having a read/write head with a base member (111), and a cover member (112), encompassing the spindle motor and the actuator with a cover member coupled to the base member, with the damping plate (115) separated a predetermined distance from an upper surface of the cover member;
sealing the air-gap (116) with a buffer member (114) disposed between the cover member (112) and the damping plate (115) and along the circumference of the air-gap, sealing the air-gap by the buffer member being a material pervious to air but sealed against water.

8. The housing method of claim 7, wherein the buffer member (114) is made of a material having a plurality of cells comprised of open cells and closed cells.

9. The housing method of claim 8, wherein the material is polyurethane foam.

10. The housing method of claim 8, wherein a percentage of the open cells in the plurality of cells ranges from 20 to 50%.

11. The housing method of claim 10, wherein the percentage of the open cells in the plurality of cells is about 30%.

12. The housing method of one of the claims 7 to 11, wherein the sealing of the air-gap further comprises equalizing pressure within the air-gap and a pressure outside the air-gap.
